# EUROPEAN PATENT SPECIFICATION

(11) **EP 1 415 696 B1**
(45) Date of publication and mention of the grant of the patent: **29.04.2009**
(21) Application number: 02380223.4
(22) Date of filing: 31.10.2002
(51) Int. Cl.: B01D 17/00, B01D 17/032, B01D 17/022, B01D 17/028, B01D 17/12, E03F 5/16, G01N 1/10, C02F 1/40

(54) **Separator for hydrocarbon containing water**
Abscheider für Kohlenwasserstoffe enthaltendes Wasser
Séparateur pour de l'eau contenant un hydrocarbure

(43) Date of publication of application: 06.05.2004
(73) Proprietor: Martin Cabre, Javier, 08028 Barcelona (ES); Pintado Lozano, Eutiquio, 08028 Barcelona (ES)
(72) Inventor: Martin Cabre, Javier, 08028 Barcelona (ES); Pintado Lozano, Eutiquio, 08028 Barcelona (ES)
(74) Representative: Carpintero Lopez, Francisco

(56) References cited:
- EP-A- 0 202 657
- EP-A- 0 533 075
- WO-A-02/07851
- WO-A-97/47829
- ES-A- 2 164 617
- FR-A- 2 654 950
- US-A- 5 340 469
- US-A- 5 520 825
- US-A- 6 077 448

## Description

### OBJECT OF THE INVENTION

The present invention relates to a separator for hydrocarbonated waters, the obvious purpose of which is to separate clean water and oils or hydrocarbons that comprise the polluted water created installations processing and consuming petroleum products.

The separator consists of a device that is transportable and that can be installed at any place, without requiring a power source for its operation, which makes the separator autonomous without requiring additional equipment of any type, resulting suitable for the specific market of low consumption of hydrocarbonated products, considerably reducing the cost of the equipment and installations.

### BACKGROUND OF THE INVENTION

It is known that all installations where petroleum products are handled and consumed are required to have a separator of hydrocarbons.

Separators are generally installations of a considerable cost, as well as requiring spacious areas suitable for their installation.

In the case of small companies or almost domestic levels, having a separator of hydrocarbons is very costly and often impossible to implement.

In order to solve this problem the applicant conceived in the past a separator for hydrocarbonated waters that is autonomous, portable and easily installed in any place, being easy to use and simple in its functionality, which is protected by P200002292.

More specifically, said separator device cited as an antecedent and designed for use by small users is based on forming a compact block or deposit with an assembly consisting of a watertight top cover and a grate for the laminar collection of hydrocarbonated water, including inside the compact body or block a compartmentalisation wall defining two chambers that are completely watertight on their top side, one of them being a primary chamber in which the hydrocarbonated waters pass towards a gross solids chamber established at the bottom part, and a second chamber being in communication with the first through a device that produces coalescence, which second chamber includes the coalescence device and a sample collection chamber in communication with a vertical pipe with a floater that allows passage of the polluted waters towards the deposit chamber or sample collection chamber, through which the clean water is drained outside to be duly collected. The latter assembly forms a "saxophone".

Although the above described separator unit has the advantage of solving an economical and location problem for small users and flows, generally fulfilling its intended function, it nevertheless suffers from certain drawbacks such as the total independence of the two chambers that prevents overspillage in the case of excess accidental fluids, as well as an ineffective closure of the corresponding floater established in the "saxophone" formed by the tube where the floater is provided and the samples are deposited, allowing passage of pollutants and thereby not allowing the water obtained to be completely clean.

Additionally, the sample collection chamber is "wet", as the liquid passes outside through a pipe provided at the top of the sample deposit or chamber, so that the corresponding intake is made from a stable or static flow resulting in a lower reliability of the reading of parameters measured in this sample collection.

Other known devices for separating hydrocarbons from water are FR 2654950 and WO 02/07851.

### DESCRIPTION OF THE INVENTION

The present invention provides a separator for water polluted with hydrocarbons as defined in the appended claims.

More precisely, the separator for hydrocarbonated waters disclosed, based on the one referred to in the previous section, has a number of improvements and novel characteristics that allow solving the aforementioned drawbacks and in addition provide new functions.

More specifically, one of the improvements of the separator of the invention is that the wall separating the two chambers is under the top part, that is, it establishes a separation between the top edge of said wall and the top part of the deposit, giving rise to a by-pass type communication through said top part of the two chambers, so that if there is an excess of accidental fluids (due to rain or any other reason) these waters, being clean as they contain no acid or carbides, flow laminarly over the top of the waters treated or contained in the corresponding chamber so that they barely collect hydrocarbons and naturally enter through the top part of the sample collection chamber through a second by-pass, reaching the outside through the drain pipe provided for such purpose. That is, this separation of the top edge of the separation or compartmentalisation wall of the two chambers defines a by-pass that considerably aids draining unpolluted water due to accidental excesses, as it increases the drainage surface preventing lateral overspills.

A further novelty of the separator of the invention relates to the unit referred to as the "saxophone", so that the vertical pipe provided with the floater instead of being communicated at its bottom with the sample collection deposit or chamber is communicated now at its top part, so that the clean water obtained falls from said top part to the sample collection chamber making the latter chamber "dry", operating at normal pressure as the water falls "naturally" through it until reaching the corresponding outlet pipe provided at a point near the bottom part of said sample collection chamber. This new communication between the floater vertical pipe and the sample collection chamber or deposit favours the accuracy of the reading.

Another novel characteristic of the separator of the invention consists of the incorporation of a spillage flow meter of the double-triangle type installed at the top of the sample collection chamber, with the obvious purpose of measuring the flow, which flow meter instead of having the conventional triangular configuration has a diamond-shaped or double-triangle configuration that allows measuring flows of up to 0.75 litres per second.

Another novel characteristic is that in order to obtain an efficient closure by the floater in the case of excess flow above the maximum rated flow, the vertical pipe inside which said floater is free to move vertically is provided on its outer surface with orifices or perforations such that when such an increase in flow occurs with respect to the maximum rated flow a suction effect is created that carries the floater to the bottom part, closing passage of the still polluted waters.

Another novel characteristic is the construction of the floater itself, which consists of a body preferably made of polypropylene with a gasket incorporated on its bottom and a rating chamber containing two or three steel spheres, so that when the body of said chamber is bolted to the floater body the gasket is held and pressed on by simple mechanical interference, without requiring the conventional glue or adhesive to join the gasket to the main body, which is a great advantage as glues generally do not withstand well hydrocarbons and are easily loosened.

Another novel characteristic is that it incorporates a fast connection system of the assembly known as a "saxophone" to the corresponding drain or outlet orifice provided in the general body of the separator, adding a single bolt for attachment and positioning.

Finally, as anther novel characteristic, provided as an option is the possibility of adding to the described device a second storage device for high concentration of hydrocarbons, with the two units being connected by a pipe and with the second unit being provided with an inlet pipe for the hydrocarbons. During storage in this new storage device the water contained in it is decanted and through a corresponding "saxophone", also incorporated in this storage device, it passes into the separator device proper, as the oil deposited on the top part of the storage equipment or chamber is collected by suction to be treated or suitably discarded by the corresponding party.

### DESCRIPTION OF THE DRAWINGS

As a complement of the description being made and in order to aid a better understanding of the characteristics of the invention, in accordance with a preferred embodiment, a set of drawings are accompanied as an integral part of the description where for purposes of illustration and in a non limiting sense the following is shown:
Figure 1. Shows a vertical section view of the separator of the invention.
Figure 2. Shows a vertical section view of the assembly referred to as a "saxophone" where the floater vertical pipe and the sample collection chamber are established, as well as the connection of the latter to the outlet of the corresponding chamber or deposit.
Figure 3. Shows a vertical section view of the floater used in the "saxophone" of the previous figure.
Figure 4. Shows a front view of the flow meter used in the separator of the invention.
Figure 5. Shows, finally, the separator represented in figure 1 coupled to a hydrocarbon storage device, provided with a "saxophone" that can be identical to the one of the separator of the invention or conventional.

### PREFERRED EMBODIMENT OF THE INVENTION

In view of the described figures, it can be seen how the separator for hydrocarbonated waters constructed according to the object of the invention consists of a hollow body (1) defining a transportable module that can be installed at any location, which includes on its top a sealed closure cover and a grate, not shown, for laminar collection of hydrocarbonated waters. Interiorly said hollow body (1) is provided with a wall (2), between the top edge of which and the top surface of the body (1) is established a separation (3) that allows communication between the chambers (4) and (5) defined by said wall (2).

The hydrocarbonated waters reach the chamber (4), where solids are decanted and collected in a lower chamber (6) known as a gross solids chamber and determined by a profile (7) having a configuration and orientation such that it prevents said gross solids decanted into the chamber (6) from passing to the other side, with the solids being periodically expelled, while said chamber (6) also serves to reduce the flow rate of the flow to be treated.

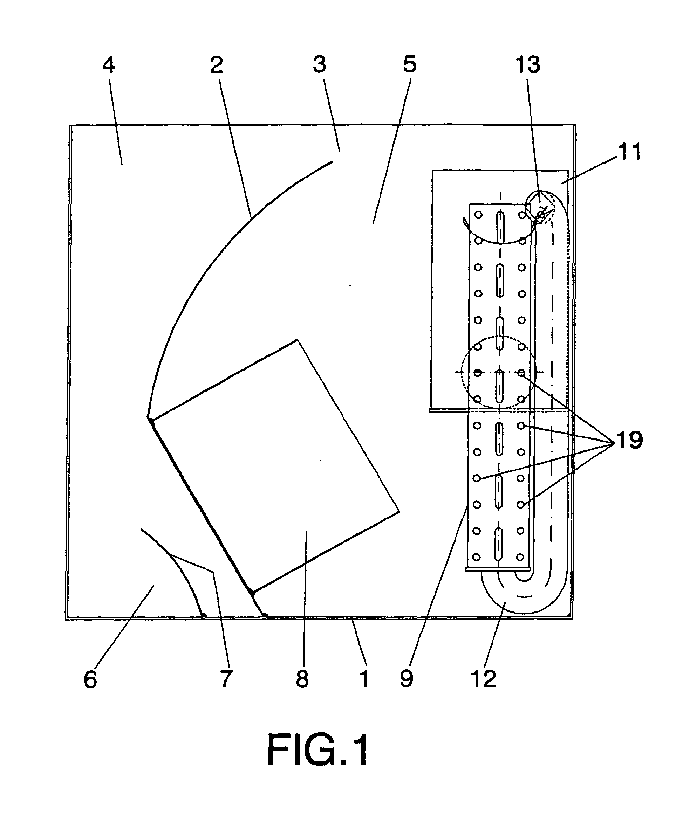

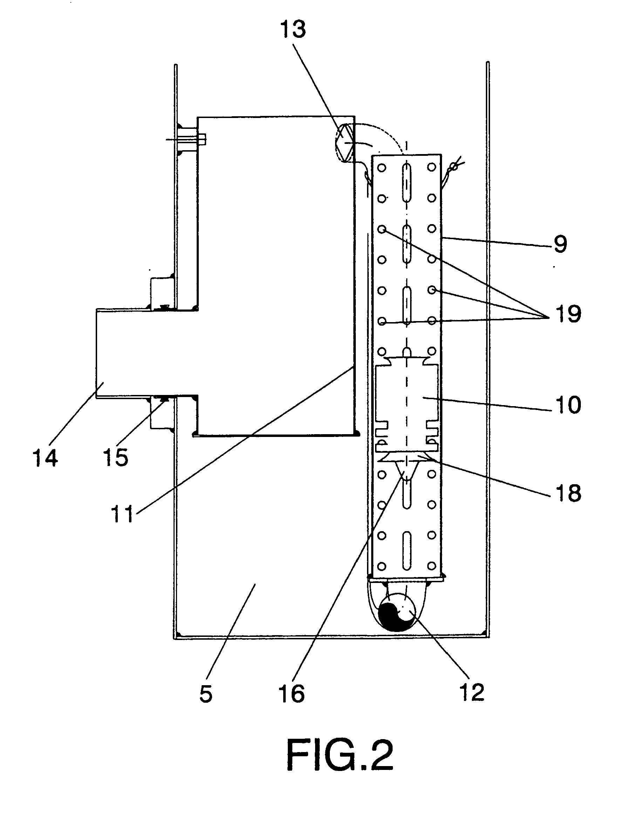

Between said chambers (4) and (5) is provided a coalescence device (8) that is placed in the chamber (5) but which has a part in communication with the chamber (4), as shown in Figure 1, with said coalescence device (8) consisting of a block formed by pipes placed collaterally to each other and that is provided on its ends with corresponding grates, one for passage of the waters from chamber (4) to the coalescence device (8) and the other for passage of waters from said coalescence device (8) to the chamber (5), the latter also being provided with a device or assembly known as a saxophone that is comprised of a housing (9) in which is placed a floater (10) free to move vertically, with said vertical pipe (9) having communication with a sample collection chamber (11) through its top part, as can be clearly seen in figures 1 and 2; at the top outlet of the pipe (12) to the sample chamber (11) is provided a double-triangle or diamond configuration flow meter (13).

The sample collection chamber (11) has an outlet pipe (14) that is coupled with a fast connection watertight system (15), consisting of a single attachment and positioning bolt, onto the drainage orifice provided for such purpose in the side wall of the chamber (5), as shown in Figure 2.

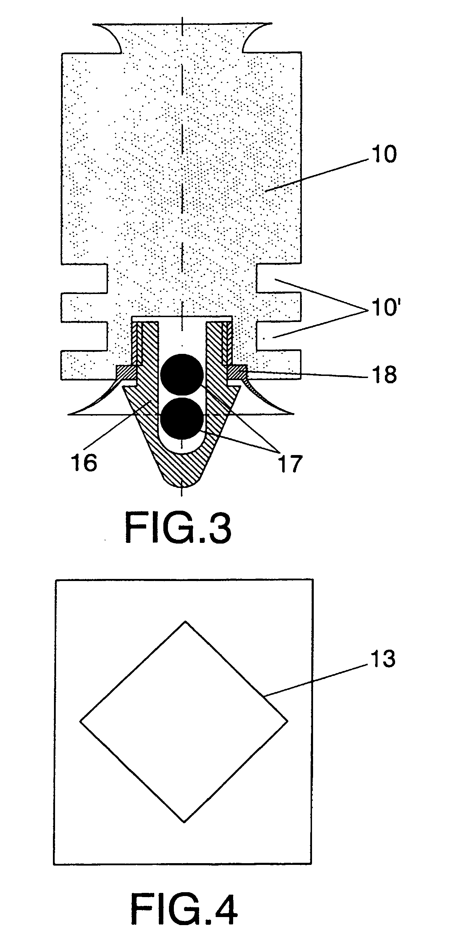

The floater (10) consists of a polypropylene body with a double throat (10'); coupled to it by threading is a rating chamber (16) with two or three steel spheres (17), so that when mounting and threading said rating chamber (16) onto the floater body (10), a single lip gasket (18) is pressed on and retained and adjusted with tightness, all of this as shown in Figure 3.

According to the preferred embodiment, the hydrocarbonated waters enter through the top grate into the chamber (4), with solids being decanted into the gross solids chamber (6), which also helps slow down the flow, and the water still containing hydrocarbons but without the aforementioned solids enters the chamber (5) through the coalescence device (8), where separation of the pollutants takes place; it is in this chamber (5) where the so-called "saxophone" is placed.

The separation (3) of the top part determined by the wall (2) between the chambers (4) and (5) makes excess accidental flows, such as rain water or any other that do not contain hydrocarbons, flow laminarly on top of the treated waters, passing the sample collection chamber (11) which when full can spill the fluid at its top by means of a by-pass provided for such purpose.

Thus, the water that passes through the vertical pipe (9) with the floater (10) reaches the sample collection chamber (11) through the pipe (12) located between the lower part of said vertical pipe (9) and the top part of the chamber (11), so that the clean water falls under gravity inside said chamber (11), allowing to collect the sample reliably, and leaves through the outlet pipe (14) placed on the bottom of said chamber (11). Thus, the latter chamber is a "dry" chamber operating at normal pressure, as the liquid does not have to rise as in the previous case, but instead falls naturally to its outlet; for this reason the sample collection is made from a dynamic flow or liquid stream, favouring the reliability of the readings of parameters measured in said sample collection.

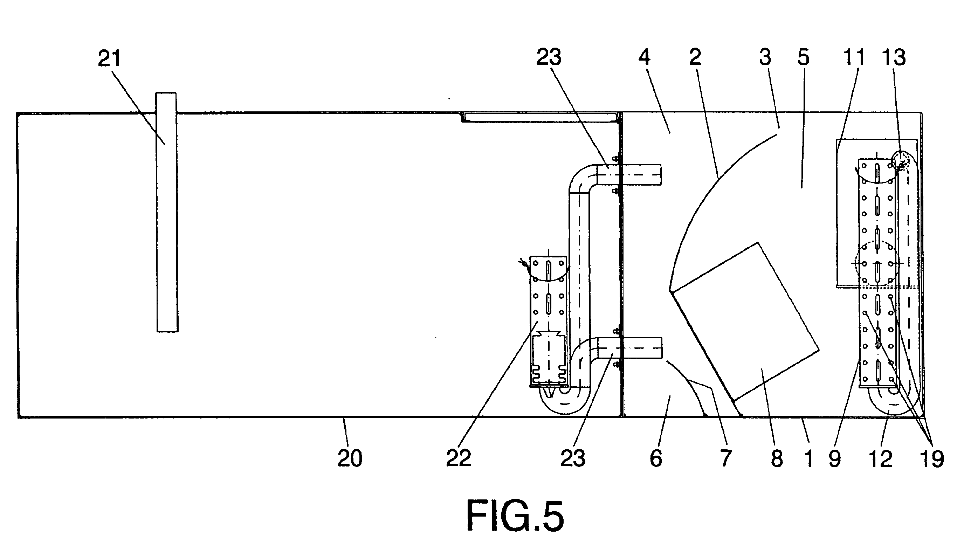

Another novel characteristic of the separator of the invention is that in the case of an excess flow above the rated maximum flow the floater (10) can establish a perfect seal, as the vertical pipe (9) is provided with orifices (19) by which a suction effect is created that carries the floater (10) downwards, thereby closing the passage to the still polluted waters, which is aided by the special configuration or construction of the floater (10) itself, its gasket (18) and the rating chamber (16) with its two or three steel spheres. The separator described can be complemented by a storage system for high concentrations of hydrocarbons, consisting of a deposit (20) with an inlet pipe (21) and a "saxophone" device (22) that acts in the conventional manner, so that this type of hydrocarbon storage system (20) is connected through one of the two pipes (22) or (23) depending on whether the equipment (20) is above-ground or buried. Said connection is obviously made to the separator (1) as shown in Figure 5, so that during storage in said equipment (20) the water contained in it is decanted to the bottom part and through the corresponding "saxophone" (22) passes to the separator device (1), with the oil deposited on the top part of the storage equipment (20) being collected by suction.

## Claims

1. Separator for water polluted with hydrocarbons, said separator being conceived for use by small users and defining an autonomous unit consisting of:
- a body (1) having an interior wall (2) that defines a first chamber (4) and a second chamber (5), wherein the polluted water enters in the first chamber (4);
- a gross solids chamber (6) formed by a profile (7) in the bottom of the first chamber (4), in which the gross solids are decanted;
- a coalescence device (8) placed in the second chamber (5) and communicating with the first chamber (4), wherein the party polluted water passes from the first chamber (4) trhough the coalescence device (8) into the second chamber (5);
- a sample collection chamber (11) having an outlet (14) placed near its bottom;
- a vertical pipe (9) provided with a number of orifices (19) and having a floater (10) free to move inside the vertical pipe (9); and
- a pipe (12) which emerges from the bottom part of the vertical pipe (9) and which communicates with the sample collection chamber (11), wherein clean water passes through the vertical pipe (9) and pipe (12) into the sample collection chamber (11),
**characterised in that**
- between the top edge of the wall (2) and the top surface of the body (1) there is a separation (3) distance that allows communication between the first chamber (4) and the second chamber (5), and by which the excess of accidental fluids laminarly flows on the top of the treated water contanined in the second chamber (5);
- the pipe (12) leads to the top part of the sample collection chamber (11) and is provided with a double - triangle flow meter (13), wherein the outlet (14) of the sample collection chamber (11) is coupled by a fast and sealed connection (15) to the corresponding wall of the second chamber (5); and **in that**
- in order to prevent the passage of pollutants towards the sample collection chamber (11) in the event of an excess flow, the number of orifices (19) of the vertical pipe (9) in which is free to move vertically the floater (10) create a suction effect which forces said floater (10) to descend in the vertical pipe (9), thereby closing it.

2. Separator for hydrocarbonated waters, according to claim 1, **characterised in that** the floater (10) consists of a fluted body (10') and a rating chamber (16) having two or more steel spheres (17), with said rating chamber (16) being threaded onto the body (10) of the floater, and achieving a hermetic seal of this threading by means of a single-lip gasket (18) pressed on by simple mechanical interference.

3. Separator for hydrocarbonated waters, according to previous claims, **characterised in that** on the separator body (1) is coupled a hydrocarbon storage system (20) with its inlet pipe (21) and a "saxophone" device (22) for passage of hydrocarbonated waters towards the separator body (1), without most of the hydrocarbons on the bottom of the storage system (20).

## Patentansprüche

1. Abscheider für mit Kohlenwasserstoffen verunreinigtes Wasser, wobei der Abscheider zur Verwendung im kleinen Maßstab ausgelegt ist und eine eigenständige Einheit bildet, welche besteht aus:
- einem Körper (1) mit einer Innenwand (2), welche eine erste Kammer (4) und eine zweite Kammer (5) bildet, wobei das verunreinigte Wasser in die erste Kammer (4) eintritt;
- eine durch ein Profil (7) im Boden der ersten Kammer (4) gebildete Kammer (6) für grobe Feststoffe, in welcher sich die groben Feststoffe absetzen;
- eine in der zweiten Kammer (5) positionierte und mit der ersten Kammer (4) verbundene Zusammenfließvorrichtung (8), wobei das teilweise verunreinigte Wasser von der ersten Kammer (4) durch die Zusammenfließvorrichtung (8) in die zweite Kammer (5) fließt;
- eine Probenentnahmekammer (11) mit einem nahe ihres Bodens vorgesehenen Auslass (14);
- ein vertikales Rohr (9) mit einer Anzahl von Öffnungen (19) und mit einem frei in dem vertikalen Rohr (9) bewegbaren Schwimmer (10); und
- ein Rohr (12), das aus dem unteren Teil des vertikalen Rohres (9) austritt und mit der Probenentnahmekammer (11) in Verbindung steht, wobei sauberes Wasser durch das vertikale Rohr (9) und das Rohr (12) in die Probenentnahmekammer (11) strömt,
**dadurch gekennzeichnet, dass**
- zwischen dem oberen Rand der Wand (2) und der Oberseite des Körpers (1) eine Abscheidungsstrecke (3) vorgesehen ist, welche eine Verbindung zwischen der ersten Kammer (4) und der zweiten Kammer (5) ermöglicht, und durch welche der Überschuss an zufälligen Fluiden laminar auf der Oberfläche des in der zweiten Kammer (5) enthaltenen aufbereiteten Wassers fließt;
- das Rohr (12) zum oberen Teil der Probenentnahmekammer (11) führt und mit einem rautenförmigen Strömungsmesser (13) versehen ist, wobei der Auslass (14) der Probenentnahmekammer (11) durch einen schnellen und dichten Anschluss (15) mit der entsprechenden Wand der zweiten Kammer (5) verbunden ist; und dass
- um im Falle einer Überströmung den Durchtritt von Verunreinigungen in die Probenentnahmekammer (11) zu verhindern, die Anzahl von Öffnungen (19) des vertikalen Rohres (9), in welchem der Schwimmer (10) frei vertikal bewegbar ist, eine Saugwirkung erzeugen, welche den Schwimmer (10) veranlasst, sich in dem vertikalen Rohr (9) nach unten zu bewegen, wodurch dieses geschlossen wird.

2. Abscheider für kohlenwasserstoffhaltiges Wasser nach Anspruch 1, **dadurch gekennzeichnet, dass** der Schwimmer (10) aus einem mit Rillen versehenen Körper (10') und einer Belastungskammer (16) mit zwei oder mehr Stahlkugeln (17) gebildet ist, wobei die Belastungskammer (16) auf den Körper (10') des Schwimmers geschraubt ist, und eine hermetische Abdichtung dieser Schraubverbindung durch eine einlippige Dichtung (18) erreicht ist, welche durch einfachen mechanischen Eingriff angepresst ist.

3. Abscheider für kohlenwasserstoffhaltiges Wasser nach einem der vorhergehenden Ansprüche, **dadurch gekennzeichnet, dass** an den Abscheiderkörper (1) ein Kohlenwasserstoffspeichersystem (20) angeschlossen ist, das ein Einlassrohr (21) und eine saxofonförmige Vorrichtung (23) für den Durchtritt von kohlenwasserstoffhaltigem Wasser in den Abscheiderkörper (1) aufweist, ohne dass der größte Teil des Kohlenwasserstoffs auf dem Boden des Speichersystems (20) bleibt.

## Revendications

1. Séparateur pour de l'eau polluée avec des hydrocarbures, ledit séparateur étant conçu pour l'utilisation par des petits utilisateurs et définissant une unité autonome constituée de:
- un corps (1) ayant une paroi intérieure (2) qui définit une première chambre (4) et une deuxième chambre (5), où l'eau polluée entre dans la première chambre (4);
- une chambre de solides grossiers (6) formée par un profilé (7) dans le fond de la première chambre (4), dans laquelle les solides grossiers sont décantés;
- un dispositif de coalescence (8) placé dans la deuxième chambre (5) et communiquant avec la première chambre (4), où l'eau partiellement polluée passe de la première chambre (4) à travers le dispositif de coalescence (8) dans la deuxième chambre (5);
- une chambre de collecte d'échantillon (11) ayant une sortie (14) placée près de son fond;
- un tuyau vertical (9) présentant un nombre d'orifices (19) et ayant un flotteur (10) libre à se déplacer à l'intérieur du tuyau vertical (9); et
- un tuyau (12) qui émerge de la partie de fond du tuyau vertical (9) et qui communique avec la chambre de collecte d'échantillon (11), où de l'eau propre passe à travers le tuyau vertical (9) et le tuyau (12) dans la chambre de collecte d'échantillon (11),
**caractérisé en ce que**
- entre le bord supérieur de la paroi (2) et la surface supérieure du corps (1), il y a une distance de séparation (3) qui permet la communication entre la première chambre (4) et la deuxième chambre (5), et par laquelle l'excès de fluides accidentels s'écoule d'une manière laminaire sur le dessus de l'eau traitée se trouvant dans la deuxième chambre (5);
- le tuyau (12) mène à la partie supérieure de la chambre de collecte d'échantillon (11) et présente un débitmètre double-triangle (13), où la sortie (14) de la chambre de collecte d'échantillon (11) est couplée par une connection rapide et scellée (15) à la paroi correspondante de la deuxième chambre (5); et **en ce que**
- pour empêcher le passage de polluants vers la chambre de collecte d'échantillon (11) dans le cas d'un écoulement excédentaire, le nombre d'orifices (19) du tuyau vertical (9) dans lequel peut se déplacer librement verticalement le flotteur (10) crée un effet de succion qui contraint ledit flotteur (10) à descendre dans le tuyau vertical (9), en le fermant ainsi.

2. Séparateur d'eaux hydrocarbonées, selon la revendication 1, **caractérisé en ce que** le flotteur (10) est constitué d'un corps à cannelures (10') et d'une chambre de calibrage (16) ayant deux sphères d'acier (17) ou plus, ladite chambre de calibrage (16) étant vissée sur le corps (10) du flotteur et réalisant un joint hermétique de ce filetage au moyen d'un joint à lèvre unique (18) appliqué par pression par une interférence mécanique simple.

3. Séparateur d'eaux hydrocarbonées selon les revendications précédentes, **caractérisé en ce que** sur le corps séparateur (1) est couplé un système de stockage d'hydrocarbures (20) avec son tuyau d'admission (21) et un dispositif "saxophone" (22) pour le passage des eaux hydrocarbonnées vers le corps séparateur (1), sans la plupart des hydrocarbures sur le fond du système de stockage (20).
